# EUROPÄISCHE PATENTSCHRIFT

(11) **EP 3 546 104 B1**
(45) Veröffentlichungstag und Bekanntmachung des Hinweises auf die Patenterteilung: **26.04.2023**
(21) Anmeldenummer: 19164583.7
(22) Anmeldetag: 22.03.2019
(51) Int. Cl.: B23K 9/12, B23K 9/133, B23K 37/00

(54) **SCHWEISSDRAHTZUFÜHRSYSTEM**
WELDING WIRE SUPPLY SYSTEM
SYSTÈME D'ALIMENTATION EN FIL DE SOUDAGE

(30) Priorität: 28.03.2018 DE 102018107404; 20.06.2018 DE 102018114754
(43) Veröffentlichungstag der Anmeldung: 02.10.2019
(73) Patentinhaber: Purem GmbH, 66539 Neunkirchen (DE)
(72) Erfinder: Donauer, Mark, 66578 Schiffweiler (DE); Diehl, Uwe, 66578 Schiffweiler (DE)
(74) Vertreter: Ruttensperger Lachnit Trossin Gomoll

(56) Entgegenhaltungen:
- EP-A2- 1 645 353
- WO-A1-2016/030739
- WO-A1-2017/068752
- JP-A- H01 170 593
- JP-A- S56 168 967
- US-A- 3 694 620

## Beschreibung

Die vorliegende Erfindung betrifft eine Schweißanlage mit einem Schweißdrahtzuführsystem, mit welchem in der Schweißanlage, insbesondere einem Schweißroboter, ein Schweißdraht zu einem Schweißbrenner geführt werden kann. Insbesondere bezieht die vorliegende Erfindung sich auf eine als Hohlwellenschweißroboter ausgebildete Schweißanlage mit einem Schweißdrahtzuführsystem, mit welchem abwechselnd verschiedene Schweißdrähte zu einem Schweißbrenner geführt werden können.

Ein derartiges Schweißdrahtzuführsystem umfasst im Allgemeinen ein Brennerkabel mit einem darin in einer Drahtseele gebildeten Drahtführungskanal, in welchem ein Schweißdraht von einer Schweißdraht-Vorschubeinheit in Richtung zu einem Schweißbrenner geführt wird. Das Brennerkabel ist in einem Schweißbrenner-Koppelbereich an den Schweißbrenner angekoppelt und ist in einem Vorschubeinheit-Koppelbereich an eine den Schweißdraht in den Drahtführungskanal vorschiebende Vorschubeinheit angekoppelt und ist mit der mit einem schraubenartig gewundenen Draht aufgebauten Drahtseele flexibel ausgebildet, so dass es den Bewegungen eines den Schweißbrenner tragenden Arms eines Schweißroboters folgen kann.

Eine Schweißanlage gemäß dem Oberbegriff des Anspruchs 1 ist aus der EP 1 645 353 A2 bekannt.

Es ist die Aufgabe der vorliegenden Erfindung, eine Schweißanlage mit einem Schweißdrahtzuführsystem vorzusehen, bei welcher eine höhere Variabilität im Einsatz erreicht werden kann.

Erfindungsgemäß wird diese Aufgabe gelöst durch eine Schweißanlage gemäß Anspruch 1, insbesondere durch einen Schweißroboter, mit einem Schweißdrahtzuführsystem, das Schweißdrahtzuführsystem umfassend eine mit einem Schweißbrenner zu koppelnden Schweißdrahtzuführeinheit mit einem darin gebildeten Drahtführungskanal sowie wenigstens zwei in einem Weichenbereich an die Schweißdrahtzuführeinheit anschließende, jeweils mit einer Schweißdraht-Vorschubeinheit zu koppelnde Schweißdrahtaufnahmekabel jeweils mit einem darin gebildeten Drahtführungskanal.

Eine derartige Schweißanlage weist, insbesondere auch bei Ausgestaltung als Schweißroboter, einen wenigstens eine als Hohlwelle ausgebildete Achse umfassenden Arm auf, wobei an einem Endbereich des Arms ein Schweißbrenner vorgesehen ist und am anderen Endbereich des Arms die im Innenvolumen des Arms verlaufende Schweißdrahtzuführeinheit mit den Schweißdrahtaufnahmekabeln gekoppelt ist.

Das bei der erfindungsgemäßen Schweißanlage eingesetzte Schweißdrahtzuführsystem bietet die Möglichkeit, über die verschiedenen Schweißdrahtaufnahmekabel von verschiedenen Schweißdraht-Vorschubeinheiten geförderte Schweißdrähte zum Schweißbrenner vorzuschieben. Die von den verschiedenen Schweißdraht-Vorschubeinheit in die Drahtführungskanäle der verschiedenen Schweißdrahtaufnahmekabel geschobenen Schweißdrähte können eine unterschiedliche Beschaffenheit haben, insbesondere mit unterschiedlichen Materialien aufgebaut sein, so dass in einfacher Art und Weise für die Durchführung von Schweißvorgängen verschiedene Schweißzusatzwerkstoffe am Schweißbrenner bereitgestellt werden können, ohne dabei irgendwelche Umbaumaßnahmen vornehmen zu müssen.

Für eine zuverlässige Führung der Schweißdrähte in den Drahtführungskanälen wird vorgeschlagen, dass in wenigstens einem, vorzugsweise jedem Schweißdrahtaufnahmekabel der Drahtführungskanal wenigstens bereichsweise in einer mit schraubenartiger Windung ausgebildeten Drahtseele bereitgestellt ist.

Zur Anbindung an einen Schweißbrenner einerseits und an Schweißdraht-Vorschubeinheiten andererseits wird vorgeschlagen, dass die Schweißdrahtzuführeinheit einen Schweißbrenner-Koppelbereich zur Ankopplung der Schweißdrahtzuführeinheit an einen Schweißbrenner aufweist, und dass jedes Schweißdrahtaufnahmekabel einen Vorschubeinheit-Koppelbereich zur Ankopplung der Schweißdrahtaufnahmekabel jeweils an eine Schweißdraht-Vorschubeinheit aufweist. Bei diesen Koppelbereichen kann es sich um Standard-Koppelbereiche handeln, welche üblicherweise bei nur einen einzigen Drahtführungskanal bereitstellenden Brennerkabeln Einsatz finden, um eine schnelle und zuverlässige Kopplung mit dem Schweißbrenner einerseits und einer Schweißdraht-Vorschubeinheit andererseits zu gewährleisten.

Zum Leiten des bei Durchführung eines Schweißvorgangs erforderlichen Schweißstroms über das Schweißdrahtzuführsystem kann in Zuordnung zu jedem Schweißdrahtaufnahmekabel ein dessen Vorschubeinheit-Koppelbereich mit dem Schweißbrenner-Koppelbereich elektrisch leitend verbindender Schweißstromleiter vorgesehen sein.

Um sicherzustellen, dass im Schweißbetrieb der dafür erforderliche Schweißdraht zum Schweißbrenner vorgeschoben werden kann, wird weiter vorgeschlagen, dass die Schweißdrahtzuführeinheit mit einem Schweißbrenner gekoppelt ist, dass an eine Mehrzahl von Schweißdrahtaufnahmekabeln, vorzugsweise jedes Schweißdrahtaufnahmekabel, jeweils eine Schweißdraht-Vorschubeinheit angekoppelt ist, und dass eine Ansteueranordnung vorgesehen ist zum Ansteuern der Schweißdraht-Vorschubeinheiten derart, dass ein von einer dieser Schweißdraht-Vorschubeinheiten in Richtung zu dem Schweißbrenner vorzuschiebender Schweißdraht durch den Drahtführungskanal des mit dieser Schweißdraht-Vorschubeinheit gekoppelten Schweißdrahtaufnahmekabels über den Weichenbereich und den Drahtführungskanal der Schweißdrahtzuführeinheit zu dem Schweißbrenner vorschiebbar ist.

Ferner kann für einen nur eine einzige Schweißstromquelle erfordernden Aufbau eine durch die Ansteueranordnung ansteuerbare Schweißstromquelle vorgesehen sein, wobei die Ansteueranordnung dazu ausgebildet ist, die Schweißstromquelle zum Zuführen eines Schweißstroms über die zum Vorschieben eines Schweißdrahts angesteuerte Schweißdraht-Vorschubeinheit anzusteuern.

Um Kenntnis darüber zu erhalten, dass insbesondere in der Schweißdrahtzuführeinheit ein Schweißdraht vorhanden ist bzw. zum Schweißbrenner geschoben wird, wird vorgeschlagen, dass in Zuordnung zu der Schweißdrahtzuführeinheit wenigstens ein Schweißdrahtsensor zur vorzugsweise induktiven Erfassung eines in dem Drahtführungskanal der Schweißdrahtzuführeinheit sich erstreckenden Schweißdrahts vorgesehen ist, wobei wenigstens ein Schweißdrahtsensor zur Eingabe eines Schweißdrahterfassungssignals in die Ansteueranordnung ausgebildet ist.

Für einen einfach zu realisierenden Aufbau kann der Weichenbereich einen Weichenkörper mit einem zu den Schweißdrahtaufnahmekabeln hin offenen Aufnahmebereich zur Aufnahme der die Drahtführungskanäle der Schweißdrahtaufnahmekabel bereitstellenden Drahtseelen aufweisen.

Um das erfindungsgemäß gestaltete System in einfacher Weise in einen Arm eines Schweißroboters integrieren zu können, wird vorgeschlagen, dass eine Längserstreckung des Weichenbereichs wenigstens das Doppelte, vorzugsweise wenigstens das Dreifache, wenigstens eines, vorzugsweise jedes Schweißdrahtaufnahmekabels ist.

Dabei kann erfindungsgemäß vorgesehen sein, dass in dem Weichenbereich in den Schweißdrahtaufnahmekabeln gebildete Drahtführungskanäle zu einem zu dem Drahtzuführkanal der Schweißdrahtzuführeinheit führenden Verbindungsvolumen zusammengeführt sind.

Die Erfindung wird nachfolgend mit Bezug auf die beiliegenden Figuren beschrieben. Es zeigt:
- Fig. 1: in prinzipieller Ansicht eine Schweißanlage mit einem Schweißdrahtzuführsystem zum Zuführen zweier Schweißdrähte zu einem Schweißbrenner;
- Fig.2: in vergrößerter Teilansicht einen Weichenbereich des Schweißdrahtzuführsystem im Detail II in Fig. 1;
- Fig.3: den in Fig. 2 dargestellten Bereich des Schweißdrahtzuführsystems mit einem daran angekoppelten Schweißbrenner;
- Fig. 4: ein in einen Arm eines Schweißroboters integriertes Schweißdrahtzuführsystem mit dem in den Fig. 1-3 dargestellten Aufbau.

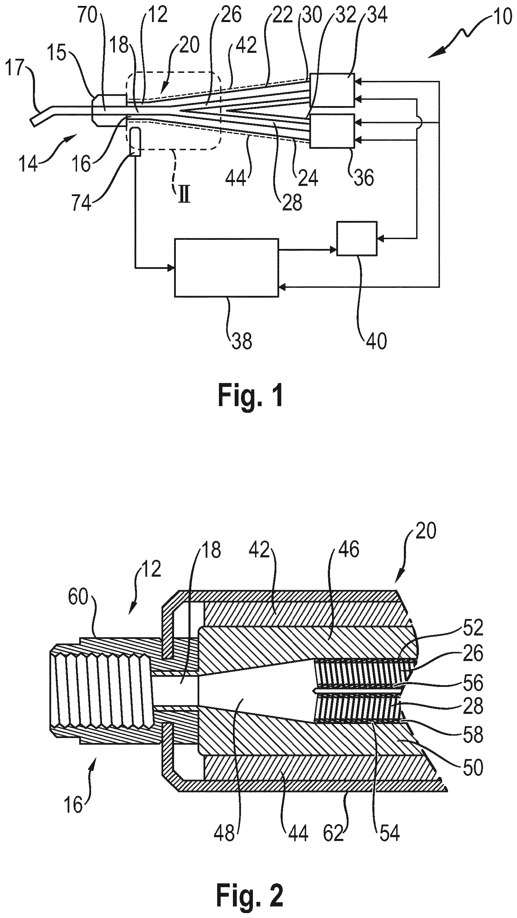

Die Fig. 1 zeigt ein allgemein mit 10 bezeichnetes Schweißdrahtzuführsystem, das in einer Schweißanlage, insbesondere einem Schweißroboter eingesetzt werden kann. Das Schweißdrahtzuführsystem 10 umfasst eine Schweißdrahtzuführeinheit 12, über welche ein für einen Schweißvorgang zu verwendender Schweißdraht in einen in Fig. 1 prinzipartig dargestellten Schweißbrenner 14 eingeleitet werden kann. Der Schweißbrenner 14 kann beispielsweise eine Brenneraufnahme 15 und einen darin einzusetzenden Brennerhals 17 umfassen. In der in einem Schweißbrenner-Koppelbereich 16 an den Schweißbrenner 14 anzukoppelnden Schweißdrahtzuführeinheit 12 ist ein den Schweißdraht in Richtung Schweißbrenner 14 leitender Drahtführungskanal 18 ausgebildet.

In einem Weichenbereich 20 schließen an die Schweißdrahtzuführeinheit 12 zwei Schweißdrahtaufnahmekabel 22, 24 an. In jedem der beiden Schweißdrahtaufnahmekabel 22, 24 ist ein jeweiliger Drahtführungskanal 26, 28 vorgesehen, der im Weichenbereich 20 jeweils zum Drahtführungskanal 18 der Schweißdrahtzuführeinheit 12 offen ist.

Mit jeweiligen Vorschubeinheit-Koppelbereichen 30, 32 sind die Schweißdrahtaufnahmekabel 22, 24 an jeweilige Schweißdraht-Vorschubeinheiten 34, 36 angekoppelt. Über jede der Schweißdraht-Vorschubeinheiten 34, 36 kann über beispielsweise Vorschubräder oder dergleichen umfassende Mechanismen jeweils ein Schweißdraht in den jeweiligen Drahtführungskanal 26, 28 des damit gekoppelten Schweißdrahtaufnahmekabels 22, 24 und über diesen zum Weichenbereich 20 bzw. in den Drahtführungskanal 18 der Schweißdrahtzuführeinheit 12 geschoben werden.

Die beiden Schweißdraht-Vorschubeinheiten 34, 36 stehen unter der Ansteuerung einer Ansteueranordnung 38. Diese ist dazu ausgelegt, für einen jeweils vorzusehenden Schweißvorgang diejenige der beiden Schweißdraht-Vorschubeinheiten zum Betrieb, also zum Schieben eines Schweißdrahts in das damit jeweils gekoppelte Schweißdrahtaufnahmekabel anzusteuern, dessen Schweißdraht für den Schweißvorgang benötigt wird. Insbesondere kann vorgesehen sein, dass in den beiden Schweißdraht-Vorschubeinheiten 34, 36 Schweißdrähte verschiedenen Materials vorgesehen bzw. vorgeschoben werden, so dass für verschiedene durchzuführende Schweißvorgänge auch verschiedene Schweißdrähte zur Verfügung gestellt werden bzw. in den Schweißbrenner 14 gefördert werden können.

Eine allgemein mit 40 bezeichnete Schweißstromquelle steht ebenfalls unter der Ansteuerung der Ansteueranordnung 38. Die Schweißstromquelle kann unter der Ansteuerung der Ansteueranordnung 38 einen Schweißstrom in diejenige der beiden Schweißdraht-Vorschubeinheiten 34, 36 einspeisen, die gleichzeitig von der Ansteueranordnung 38 zum Vorschieben von Schweißdraht angesteuert wird.

In Zuordnung zu jedem der beiden Schweißdrahtaufnahmekabel 22, 24 ist ein Schweißstromleiter 42 bzw. 44 vorgesehen. Dieser leitet den von der Schweißstromquelle 40 in die zum Vorschieben eines Schweißdrahts jeweils angesteuerte Schweißdraht-Vorschubeinheit 34 bzw. 36 eingespeisten Schweißstrom zu der Schweißdrahtzuführeinheit 12 und über diese in den Schweißbrenner 14.

Die Fig. 2 zeigt vergrößert das Detail II der Fig. 1 mit der Schweißdrahtzuführeinheit 12 und dem Weichenbereich 20. Der Weichenbereich 20 umfasst einen Weichenkörper 46, in welchem ein zu dem Drahtführungskanal 18 der Schweißdrahtzuführeinheit 12 führendes, in der Vorschubrichtung eines Schweißdrahts sich trichterartig verjüngendes Verbindungsvolumen 48 vorgesehen ist. In dem in Richtung zu den Schweißdrahtaufnahmekabeln 22, 24 orientierten Aufnahmebereich 50 weist der Weichenkörper 46 zwei zu dem Verbindungsvolumen 48 hin offene Kanäle 52, 54 auf, in welche jeweilige mit einem gewundenen Draht und somit flexibel aufgebaute Drahtseelen 56, 58 der Schweißdrahtaufnahmekabel 22, 24 eingeführt sind oder entsprechende in den Schweißdrahtaufnahmekabeln 22, 24 verlaufende Drahtseelen an die im Weichenkörper 46 verlaufenden Drahtseelen 56, 58 anschließen. In diesen Drahtseelen sind die Drahtführungskanäle 26, 28 der Schweißdrahtaufnahmekabel 22, 24 bereitgestellt bzw. im Weichenkörper 46 weitergeführt. Im Weichenbereich 20 sind die in den Drahtseelen 56, 58 gebildeten bzw. weitergeführten Drahtführungskanäle 26, 28 über das trichterartig sich verjüngende Verbindungsvolumen 48 zum Drahtführungskanal 18 der Schweißdrahtzuführeinheit 12 offen.

In prinzipieller Darstellung angedeutet sind in Fig. 2 auch die den Schweißstrom in Richtung zum Schweißbrenner 14 leitenden Schweißstromleiter 42, 44. Diese können in elektrisch leitender Verbindung mit einem Kopplungskopf 60 der Schweißdrahtzuführeinheit 12 stehen und so über den Kopplungskopf 60 den Schweißstrom in den Schweißbrenner 14 einleiten. Ein hülsenartiges Gehäuse 62 kann den Bereich, in welchem die Drahtführungskanäle 26, 28 an den Drahtführungskanal 18 anschließen, umgebend angeordnet sein und einen stabilen Zusammenhalt gewährleisten, insbesondere auch den Kopplungskopf 60 am Weichenkörper 50 arretieren. Dabei ist in Fig. 2 zu erkennen, dass der Drahtzuführkanal 18 der Schweißdrahtzuführeinheit 12 zumindest bereichsweise in einem in den Kopplungskopf 60 sich erstreckenden Endbereich des Weichenkörpers 50 ausgebildet sein kann.

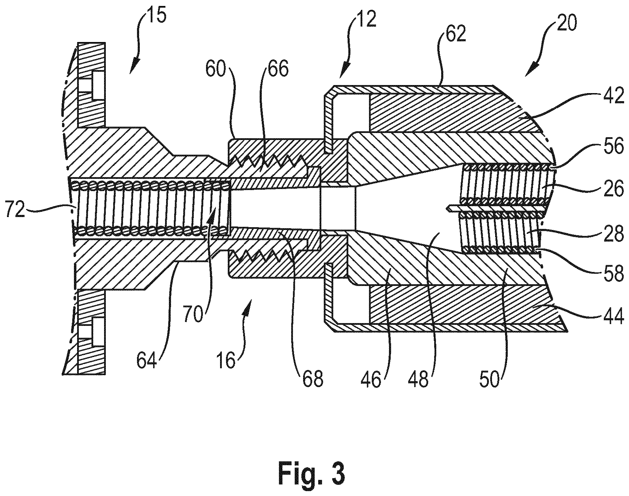

Die Fig. 3 zeigt die Anbindung des Schweißbrenners 14, insbesondere der bereichsweise dargestellten Brenneraufnahme 15 desselben, an die Schweißdrahtzuführeinheit 12. Die Brenneraufnahme 15 oder eine damit zu koppelnde Verbindungseinheit weist einen halsartigen Kopplungsabschnitt 64 auf, der mit einem mit Außengewinde ausgebildeten Endabschnitt 66 in den mit Innengewinde ausgebildeten Kopplungskopf 60 der Schweißdrahtzuführeinheit 12 eingesetzt werden kann. In dem Kopplungsabschnitt 64 ist eine zentrale Öffnung vorgesehen, in welche von einem dem Kopplungskopf 60 zugewandten Ende her eine Übergangshülse 68 eingesetzt ist. In der Übergangshülse 68 ist ein Abschnitt eines Drahtführungskanals 70 der Brenneraufnahme 15 bzw., sofern vorhanden, einer diese ankoppelnden Verbindungseinheit gebildet. Dieser Abschnitt des Drahtführungskanals kann beispielsweise sich in der Drahtvorschubrichtung verjüngend ausgebildet sein, so dass ein im Wesentlichen stufenloser Übergang vom Drahtführungskanal 18 der Schweißdrahtzuführeinheit 12 zu dem in einer Drahtseele 72 gebildeten Abschnitt des Drahtführungskanals 70 der Brenneraufnahme 15 bzw. der Verbindungseinheit bereit gestellt wird. Es ist darauf hinzuweisen, dass der in den Fig. 2 und 3 dargestellte Schweißbrenner-Koppelbereich 16 der Schweißdrahtzuführeinheit 12 einen herkömmlichen Aufbau aufweisen kann, wie er auch bei Systemen eingesetzt wird, bei welchen nur ein einziger Drahtführungskanal zum Zuführen eines einzigen Schweißdrahtes zu einem Schweißbrenner vorgesehen ist. In entsprechender Weise können die Vorschubeinheit-Koppelbereiche 30, 32, mit welchen die beiden Schweißdrahtaufnahmekabel 22, 24 an die damit jeweils zu koppelnden Schweißdraht-Vorschubeinheiten 34, 36 angekoppelt werden können, einen Aufbau aufweisen, wie er bei nur einen einzigen Drahtführungskanal bereitstellenden, herkömmlicherweise eingesetzten Brennerkabeln Anwendung findet.

Um in einem erfindungsgemäß aufgebauten Schweißdrahtzuführsystem 10 Informationen darüber bereitzustellen, dass ein Schweißdraht zur Verfügung steht bzw. zum Schweißbrenner 14 vorgeschoben wird, kann beispielsweise im Bereich der Schweißdrahtzuführeinheit 12 ein induktiv arbeitender Schweißdrahtsensor 74 vorgesehen sein. Bewegt sich im Drahtführungskanal 18 der Schweißdrahtzuführeinheit 12 ein durch eine der beiden Schweißdraht-Vorschubeinheiten 34, 36 geförderter Schweißdraht, so kann der Sensor 74 diese erfassen bzw. ein entsprechendes Erfassungssignal in die Ansteuerordnung 38 eingeben, so dass darin Rückkopplungsinformation darüber bereit gestellt wird, dass die von dieser angesteuerte Schweißdraht-Vorschubeinheit in korrekter Weise einen Schweißdraht in Richtung zum Schweißbrenner 14 fördert.

Um die Integration in eine Schweißanlage, insbesondere einen Schweißroboter, zu vereinfachen, kann das Schweißdrahtzuführsystem 10 insbesondere auch in dem Bereich der beiden Schweißdrahtaufnahmekabel 22, 24 mit einer Umhüllung bzw. einem Mantel ausgebildet sein, in welchem die beiden Schweißdrahtaufnahmekabel 22, 24 bzw. die darin gebildeten Drahtführungskanäle verlaufen. Dieser Mantel kann kurz vor den Vorschubeinheit-Koppelbereichen 30, 32 enden, so dass dann die beiden Schweißdrahtaufnahmekabel 22, 24 voneinander unabhängig zu der damit jeweils zu koppelnden Schweißdraht-Vorschubeinheit 34, 36 verlaufen können. Auch kann die Schweißdrahtzuführeinheit 12 zwischen dem Weichenbereich 20 und dem Kopplungskopf 60 einen flexiblen, kabelartigen Längenabschnitt aufweisen, welcher hinsichtlich seines Aufbaus beispielsweise dem Aufbau der Schweißdrahtaufnahmekabel 22, 24 entsprechen kann. Bei einer derartigen Ausgestaltung liegt der Weichenbereich 20 weiter entfernt vom Schweißbrenner-Koppelbereich 16, als bei der Fig. 1 dargestellten Ausgestaltung.

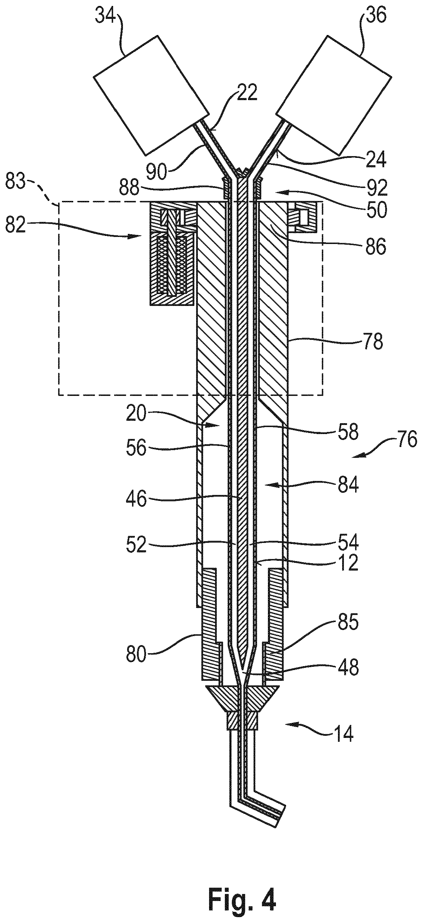

Eine weitere Ausgestaltung des Schweißdrahtzuführsystems 10, welches die einfache Integration desselben einen Arm 76 eines Schweißroboters gestattet, ist in Fig. 4 dargestellt. Das in Figur 4 gezeigte Schweißdrahtzuführsystem 10 ist so gestaltet, dass im Vergleich zu der prinzipiellen Darstellung der Fig. 1 ein deutlich größerer Längenabschnitt vorhanden ist, in welchem in der Schweißdrahtzuführeinheit 12 die beiden Drahtseelen 56, 58 bzw. die darin ausgebildeten Drahtführungskanäle 26, 28 zusammengeführt sind, um einen baulich vereinheitlichten, schlauchartigen Bereich zu bilden, der im Inneren des Arms 76 verlaufend angeordnet werden kann.

Dargestellt sind in Fig. 4 beispielhaft die als Hohlwelle ausgebildete fünfte Achse 78 und die dazu koaxial angeordnete und ebenfalls als Hohlwelle ausgebildete sechste Achse 80 des Arms 76. Der in Fig. 4 nicht im Detail dargestellte Bereich des Arms 76, in welchem die fünfte Achse beispielsweise über einen Mechanismus 82 drehbar getragen ist, ist in Fig. 4 allgemein mit 83 bezeichnet.

In dem Innenvolumenbereich der beiden als Hohlwellen ausgebildeten Achsen 78, 80 verläuft der vereinheitlichte Längenabschnitt 84 der Schweißdrahtzuführeinheit 12. Dieser Längenabschnitt 84 ist im Wesentlichen bereitgestellt durch den entsprechend länger ausgestalteten Weichenbereich 20 mit einem einerseits das Verbindungsvolumen 48 und andererseits die zu dem Verbindungsvolumen 48 hin offenen Kanäle 52, 54 bereitstellenden Weichenkörper 46. Der Weichenkörper 46 ist so dimensioniert, dass er sich nahezu entlang des gesamten Innenvolumenbereichs der Achsen 78, 80 erstreckt. An einem im Bereich der sechsten Achse 80 gebildeten Endbereich 85 des Arms 76 ist der Schweißbrenner 14 am Arm 76 getragen. An einem von der sechsten Achse 80 entfernten Endbereich 86 des Arms 76 bzw. der fünften Achse 78 tritt der Längenabschnitt 84 aus dem Arm 76 bzw. der fünften Achse 78 desselben aus und weist in diesem Bereich den Aufnahmebereich 50 auf, in welchem die beispielsweise auch in den Schweißdrahtaufnahmekabeln 22, 24 verlaufenden Drahtseelen 56, 58 in die Kanäle 52, 54 des Weichenkörpers 46 eingeführt sind oder entsprechende Drahtseelen oder dergleichen der Schweißdrahtaufnahmekabel 22, 24 an die im Weichenkörper 46 verlaufenden Drahtseelen 56, 58 anschließen bzw. angeschlossen sind. Im Bereich eines beispielsweise außerhalb des Arms 76 positionierten Verbindungsstücks 88 kann der Weichenkörper 46 mechanisch stabil mit einem jeweiligen Mantel 90, 92 der Schweißdrahtaufnahmekabel 22, 24 verbunden sein. Auch die in Zuordnung zu den Schweißdrahtaufnahmekabeln 22, 24 jeweils vorgesehenen Schweißstromleiter 42, 44 können im Bereich des Verbindungsstücks 88 aus den Schweißdrahtaufnahmekabeln 22, 24 in den Längenbereich 84, also im Wesentlichen auch in den Weichenbereich 20 eingeleitet sein.

Aus der vorangehenden Beschreibung geht hervor, dass im Sinne der vorliegenden Erfindung der Weichenbereich 20 denjenigen Längenbereich der Schweißdrahtzuführeinheit 12 bereitstellt, in welchem einerseits die beiden bzw. die mehreren Schweißdrahtaufnahmekabel 22, 24 bzw. die darin jeweils gebildeten Drahtführungskanäle 26, 28 zusammengeführt sind und dann in einem vereinheitlichten Körper, nämlich dem Weichenkörper 46, verlaufen, bis sie am anderen Ende des Weichenbereichs in das Verbindungsvolumen 48 übergehen, durch welches hindurch der für einen durchzuführenden Schweißvorgang jeweils zu verwendende Schweißdraht zum Schweißbrenner 14 geleitet wird. Bei dem in Fig.1 dargestellten Ausgestaltungsbeispiel ist dieser Längenbereich vergleichsweise kurz, beispielsweise kürzer als derjenige Längenbereich, in welchem die beiden Schweißdrahtaufnahmekabel 22, 24 als grundsätzlich voneinander getrennt ausgebildete Baugruppen verlaufen, gegebenenfalls aber durch Umkleidung mit einem Mantel zusammengefasst sein können. Bei dem in Fig. 4 dargestellten Ausgestaltungsbeispiel ist die Längserstreckung des Weichenbereichs 20, in welchem die Drahtführungskanäle 26, 28 bzw. die diese bereitstellenden Drahtseelen 56, 58 in dem Weichenkörper 46 verlaufen, deutlich größer, als die Längserstreckung der vom Aufnahmebereich 50 bzw. vom Verbindungsstück 88 zu den jeweiligen Schweißdraht-Vorschubeinheiten 34, 36 führenden Schweißdrahtaufnahmekabel 22, 24. Beispielsweise kann diese Längserstreckung des im Wesentlichen den Weichenbereich 20 bereitstellenden Längenabschnitts 84 wenigstens das Doppelte, vorzugsweise wenigstens das Dreifache, der Längserstreckung der zu den Schweißdraht-Vorschubeinheiten 34, 36 führenden Schweißdrahtaufnahmekabel 22, 24 sein.

## Patentansprüche

1. Schweißanlage, insbesondere Schweißroboter, umfassend ein Schweißdrahtzuführsystem (10), das Schweißdrahtzuführsystem (10) umfassend eine mit einem Schweißbrenner (14) zu koppelnde Schweißdrahtzuführeinheit (12) mit einem darin gebildeten Drahtführungskanal (18) sowie wenigstens zwei in einem Weichenbereich (20) an die Schweißdrahtzuführeinheit (12) anschließende, jeweils mit einer Schweißdraht-Vorschubeinheit (34, 36) zu koppelnde Schweißdrahtaufnahmekabel (22, 24) jeweils mit einem darin gebildeten Drahtführungskanal (26, 28), **gekennzeichnet durch** einen wenigstens eine als Hohlwelle ausgebildete Achse (78, 80) umfassenden Arm (76), wobei an einem Endbereich (85) des Arms (76) ein Schweißbrenner (14) vorgesehen ist und am anderen Endbereich (86) des Arms (76) die im Innenvolumen des Arms (76) verlaufende Schweißdrahtzuführeinheit (12) mit den Schweißdrahtaufnahmekabeln (22, 24) gekoppelt ist.

2. Schweißanlage nach Anspruch 1, **dadurch gekennzeichnet, dass** in wenigstens einem, vorzugsweise jedem Schweißdrahtaufnahmekabel (22, 24) der Drahtführungskanal wenigstens bereichsweise in einer mit schraubenartiger Windung ausgebildeten Drahtseele (56, 58) bereitgestellt ist.

3. Schweißanlage nach Anspruch 1 oder 2, **dadurch gekennzeichnet, dass** die Schweißdrahtzuführeinheit (12) einen Schweißbrenner-Koppelbereich (16) zur Ankopplung der Schweißdrahtzuführeinheit (12) an einen Schweißbrenner (14) aufweist, und dass jedes Schweißdrahtaufnahmekabel (22, 24) einen Vorschubeinheit-Koppelbereich (30, 32) zur Ankopplung der Schweißdrahtaufnahmekabel (22, 24) jeweils an eine Schweißdraht-Vorschubeinheit (34, 36) aufweist.

4. Schweißanlage nach Anspruch 3, **dadurch gekennzeichnet, dass** in Zuordnung zu jedem Schweißdrahtaufnahmekabel (22, 24) ein dessen Vorschubeinheit-Koppelbereich (30, 32) mit dem Schweißbrenner-Koppelbereich (16) elektrisch leitend verbindender Schweißstromleiter (42, 44) vorgesehen ist.

5. Schweißanlage nach einem der vorangehenden Ansprüche, **dadurch gekennzeichnet, dass** die Schweißdrahtzuführeinheit (12) mit einem Schweißbrenner (14) gekoppelt ist, dass an eine Mehrzahl von Schweißdrahtaufnahmekabeln (22, 24), vorzugsweise jedes Schweißdrahtaufnahmekabel (22, 24), jeweils eine Schweißdraht-Vorschubeinheit (34, 36) angekoppelt ist, und dass eine Ansteueranordnung (38) vorgesehen ist zum Ansteuern der Schweißdraht-Vorschubeinheiten (34, 36) derart, dass ein von einer dieser Schweißdraht-Vorschubeinheiten (34, 36) in Richtung zu dem Schweißbrenner vorzuschiebender Schweißdraht durch den Drahtführungskanal (26, 28) des mit dieser Schweißdraht-Vorschubeinheit (34, 36) gekoppelten Schweißdrahtaufnahmekabels über den Weichenbereich (20) und den Drahtführungskanal (18) der Schweißdrahtzuführeinheit (12) zu dem Schweißbrenner (14) vorschiebbar ist.

6. Schweißanlage nach Anspruch 4 und 5, **dadurch gekennzeichnet, dass** eine durch die Ansteueranordnung (38) ansteuerbare Schweißstromquelle (40) vorgesehen ist, wobei die Ansteueranordnung (38) dazu ausgebildet ist, die Schweißstromquelle (40) zum Zuführen eines Schweißstroms über die zum Vorschieben eines Schweißdrahts angesteuerte Schweißdraht-Vorschubeinheit (34, 36) anzusteuern.

7. Schweißanlage nach Anspruch 5 oder 6, **dadurch gekennzeichnet, dass** in Zuordnung zu der Schweißdrahtzuführeinheit (12) wenigstens ein Schweißdrahtsensor (74) zur vorzugsweise induktiven Erfassung eines in dem Drahtführungskanal (18) der Schweißdrahtzuführeinheit (12) sich erstreckenden Schweißdrahts vorgesehen ist, wobei wenigstens ein Schweißdrahtsensor (74) zur Eingabe eines Schweißdrahterfassungssignals in die Ansteueranordnung (38) ausgebildet ist.

8. Schweißanlage nach Anspruch 2 und einem der Ansprüche 3-7, **dadurch gekennzeichnet, dass** der Weichenbereich (20) einen Weichenkörper (46) mit einem zu den Schweißdrahtaufnahmekabeln (22, 24) hin offenen Aufnahmebereich (50) zur Aufnahme der die Drahtführungskanäle (26, 28) der Schweißdrahtaufnahmekabel (22, 24) bereitstellenden Drahtseelen (56, 58) aufweist.

9. Schweißanlage nach einem der vorangehenden Ansprüche, **dadurch gekennzeichnet, dass** eine Längserstreckung des Weichenbereichs (20) wenigstens das Doppelte, vorzugsweise wenigstens das Dreifache, wenigstens eines, vorzugsweise jedes Schweißdrahtaufnahmekabels (22, 24) ist.

10. Schweißanlage nach einem der vorangehenden Ansprüche, **dadurch gekennzeichnet, dass** in dem Weichenbereich (20) in den Schweißdrahtaufnahmekabeln (22, 24) gebildete Drahtführungskanäle (26, 28) zu einem zu dem Drahtzuführkanal (18) der Schweißdrahtzuführeinheit (12) führenden Verbindungsvolumen (48) zusammengeführt sind.

## Claims

1. Welding unit, especially welding robot, comprising a welding rod supply system (10), the welding rod supply system (10) comprising a welding rod supply unit (12) to be coupled with a welding torch (14) with a rod guide duct (18) formed therein as well as with at least two welding rod-receiving cables (22, 24), which adjoin the welding rod supply unit (12) in a switch area (20) and are to be coupled with a respective welding rod feed unit (34, 36), each with a respective rod guide duct (26, 28) formed in it,
**characterized by** an arm (76) comprising at least one axis (78, 80) configured as a hollow shaft, wherein a welding torch (14) is provided at an end area (85) of the arm (76) and the welding rod supply unit (12) extending in the inner volume of the arm (76) is coupled with the welding rod-receiving cables (22, 24) at the other end area (86) of the arm (76).

2. Welding unit in accordance with claim 1, **characterized in that** the rod guide duct is provided in at least one and preferably each welding rod-receiving cable (22, 24) in a rod core (56, 58) configured with a helical winding in at least some areas.

3. Welding unit in accordance with claim 1 or 2, **characterized in that** the welding rod supply unit (12) has a welding torch coupling area (16) for coupling the welding rod supply unit (12) with a welding torch (14), and that each welding rod-receiving cable (22, 24) has a feed unit coupling area (30, 32) for coupling the welding rod-receiving cables (22, 24) with a respective welding rod feed unit (34, 36).

4. Welding unit in accordance with claim 3, **characterized in that** in association with each welding rod-receiving cable (22, 24), a welding current conductor (42, 44) connecting the feed unit coupling area (30, 32) of said receiving cable with the welding torch coupling area (16) in an electrically conductive manner is provided.

5. Welding unit in accordance with one of the above claims, **characterized in that** the welding rod supply unit (12) is coupled with a welding torch (14), that a respective welding rod feed unit (34, 36) is coupled with a plurality of welding rod-receiving cables (22, 24) and preferably with each welding rod-receiving cable (22, 24), and that an actuating device (38) is provided for actuating the welding rod feed units (34, 36) such that a welding rod to be fed by one of these welding rod feed units (34, 36) in the direction of the welding torch can be fed through the rod guide duct (26, 28) of the welding rod-receiving cable coupled with this welding rod feed unit (34, 36) over the switch area (20) and the rod guide duct (18) of the welding rod supply unit (12) to the welding torch (14).

6. Welding unit in accordance with claims 4 and 5, **characterized in that** a welding current source (40) that can be actuated by the actuating device (38) is provided, wherein the actuating device (38) is configured to actuate the welding current source (40) for feeding a welding current via the welding rod feed unit (34, 36) actuated to feed a welding rod.

7. Welding unit in accordance with claim 5 or 6, **characterized in that** in association with the welding rod supply unit (12), at least one welding rod sensor (74) is provided for the preferably inductive detection of a welding rod extending in the rod guide duct (18) of the welding rod supply unit (12), wherein at least one welding rod sensor (74) is configured for inputting a welding rod detection signal into the actuating device (38).

8. Welding unit in accordance with claim 2 and one of the claims 3-7, **characterized in that** the switch area (20) has a switch body (46) with a receiving area (50) open towards the welding rod-receiving cables (22, 24) for receiving the rod cores (56, 58) providing the rod guide ducts (26, 28) of the welding rod-receiving cables (22, 24).

9. Welding unit in accordance with one of the above claims, **characterized in that** a longitudinal extension of the switch area (20) is at least twice, preferably at least three times of at least one and preferably each welding rod-receiving cable (22, 24).

10. Welding unit in accordance with one of the above claims, **characterized in that** rod guide ducts (26, 28) formed in the welding rod-receiving cables (22, 24) are merged in the switch area (20) into a connection volume (48) leading to the rod supply duct (18) of the welding rod supply unit (12).

## Revendications

1. Unité de soudage, en particulier robot de soudage, comprenant un système d'alimentation en fil de soudage (10), le système d'alimentation en fil de soudage (10) comprenant une unité d'alimentation en fil de soudage (12) à coupler à une torche de soudage (14) avec un conduit de guidage de fil (18) formé dans celle-ci ainsi qu'avec au moins deux câbles de réception de fil de soudage (22, 24), qui se raccordent à l'unité d'alimentation en fil de soudage (12) dans une zone de commutation (20) et doivent être couplés à une unité d'alimentation en fil de soudage respective (34, 36), chacune avec un conduit de guidage de fil respectif (26, 28) formé dans celle-ci,
**caractérisé par** un bras (76) comprenant au moins un axe (78, 80) conçu comme un arbre creux, une torche de soudage (14) étant prévue dans une zone d'extrémité (85) du bras (76) et l'unité d'alimentation en fil de soudage (12) s'étendant dans le volume intérieur du bras (76) étant couplée aux câbles de réception de fil de soudage (22, 24) dans l'autre zone d'extrémité (86) du bras (76).

2. Unité de soudage selon la revendication 1, **caractérisée en ce que** le conduit de guidage de fil est prévu dans au moins un et de préférence chaque câble de réception de fil de soudage (22, 24) dans un noyau de fil (56, 58) configuré avec un enroulement hélicoïdal dans au moins certaines zones.

3. Unité de soudage selon la revendication 1 ou 2, **caractérisée en ce que** l'unité d'alimentation en fil de soudage (12) présente une zone de couplage de torche de soudage (16) pour coupler l'unité d'alimentation en fil de soudage (12) avec une torche de soudage (14), et **en ce que** chaque câble de réception de fil de soudage (22, 24) présente une zone de couplage d'unité d'alimentation (30, 32) pour coupler les câbles de réception de fil de soudage (22, 24) avec une unité d'alimentation de fil de soudage respective (34, 36).

4. Unité de soudage selon la revendication 3, **caractérisée en ce qu'**en association avec chaque câble de réception de fil de soudage (22, 24), un conducteur de courant de soudage (42, 44) reliant la zone de couplage de l'unité d'alimentation (30, 32) dudit câble de réception avec la zone de couplage de la torche de soudage (16) de manière électriquement conductrice est prévu.

5. Unité de soudage selon l'une des revendications précédentes, **caractérisée en ce que** l'unité d'alimentation en fil de soudage (12) est couplée à une torche de soudage (14), **en ce qu'**une unité d'alimentation en fil de soudage (34, 36) est couplée à plusieurs câbles de réception de fil de soudage (22, 24) et de préférence à chaque câble de réception de fil de soudage (22, 24), et **en ce qu'**un dispositif d'actionnement (38) est prévu pour actionner les unités d'alimentation en fil de soudage (34, 36) de telle sorte qu'un fil de soudage devant être alimentée par l'une de ces unités d'alimentation en fil de soudage (34, 36) en direction de la torche de soudage puisse être alimenté par le conduit de guidage de fil (26, 28) du câble de réception de fil de soudage couplé à cette unité d'alimentation en fil de soudage (34, 36) via la zone de commutation (20) et le conduit de guidage de fil (18) de l'unité d'alimentation en fil de soudage (12) vers la torche de soudage (14).

6. Unité de soudage selon les revendications 4 et 5, **caractérisée en ce qu'**une source de courant de soudage (40) pouvant être actionnée par le dispositif d'actionnement (38) est prévue, le dispositif d'actionnement (38) étant configuré pour actionner la source de courant de soudage (40) afin d'amener un courant de soudage via l'unité d'alimentation en fil de soudage (34, 36) actionnée pour amener un fil de soudage.

7. Unité de soudage selon la revendication 5 ou 6, **caractérisée en ce qu'**en association avec l'unité d'alimentation en fil de soudage (12), au moins un capteur de fil de soudage (74) est prévu pour la détection, de préférence inductive, d'un fil de soudage s'étendant dans le conduit de guidage de fil (18) de l'unité d'alimentation en fil de soudage (12), dans laquelle au moins un capteur de fil de soudage (74) est configuré pour entrer un signal de détection de fil de soudage dans le dispositif d'actionnement (38).

8. Unité de soudage selon la revendication 2 et l'une des revendications 3-7, **caractérisée en ce que** la zone de commutation (20) présente un corps de commutation (46) avec une zone de réception (50) ouverte vers les câbles de réception de fil de soudage (22, 24) pour recevoir les noyaux de fil (56, 58) fournissant les conduits de guidage de fil (26, 28) des câbles de réception de fil de soudage (22, 24).

9. Unité de soudage selon l'une des revendications précédentes, **caractérisée en ce qu'**une extension longitudinale de la zone de commutation (20) est au moins deux fois, de préférence au moins trois fois d'au moins un et de préférence de chaque câble de réception de fil de soudage (22, 24).

10. Unité de soudage selon l'une des revendications précédentes, **caractérisée en ce que** des conduits de guidage de fil (26, 28) formés dans les câbles de réception de fil de soudage (22, 24) sont réunis dans la zone de commutation (20) en un volume de raccordement (48) menant au conduit d'alimentation en fil (18) de l'unité d'alimentation en fil de soudage (12).
